# EUROPEAN PATENT SPECIFICATION

(11) **EP 1 514 805 B1**
(45) Date of publication and mention of the grant of the patent: **03.12.2008**
(21) Application number: 03760902.1
(22) Date of filing: 19.06.2003
(51) Int. Cl.: B65D 35/02

(54) **POUCH-LIKE BLOW MOLDED CONTAINER**
BEUTELFÖRMIGER BLASGEFORMTER BEHÄLTER
CONTENANT DE TYPE SACHET MOULE PAR SOUFFLAGE

(30) Priority: 20.06.2002 JP 2002179688; 20.06.2002 JP 2002180210
(43) Date of publication of application: 16.03.2005
(60) Divisional application: 07019270.3
(73) Proprietor: Yoshino Kogyosho Co., Ltd., Tokyo 136-8531 (JP)
(72) Inventor: YAMANAKA, Nobuo, Koto-ku, Tokyo 136-8531 (JP); KISHI, Takao, Koto-ku, Tokyo 136-8531 (JP)
(74) Representative: Gray, James
(86) International application number: PCT/JP2003/007783
(87) International publication number: WO 2004/000671

(56) References cited:
- WO-A1-02/38360
- JP-A- 8 258 853
- JP-A- 48 039 560
- JP-A- 60 077 868
- JP-A- 2001 114 307
- JP-A- 2001 219 948
- JP-A- 2002 193 232
- JP-U- 3 056 546
- JP-U- 4 115 145
- JP-U- 52 017 267
- JP-Y1- 40 014 714

## Description

### Technical Field

(A-1) This invention relates to a blow-molded synthetic resin container in the shape of a pouch, which has a thin wall and is molded in a relatively large size by a blow molding means

### Background of the Invention

(A-2) There are known refillable synthetic resin containers. One is pouch containers obtained by folding synthetic resin film and welding and assembling the folded film portions. The other is tubular containers, which are designed in such a manner that the shoulder portion can be flexibly reversed and caved into the body and that the container can be displayed in the inverted position, as disclosed in the Japanese utility model registration No. 2573927.

(A-3) The refillable pouch containers made of synthetic resin film are advantageous in that the production cost is inexpensive and that waste disposal is easy. On the other hand, they are disadvantageous in that they have a low ability to retain their own shape and that handling is unstable at the times of cardboard box packaging, product display at the stores, or refilling operations. In addition, since the weld seal portions are formed as protrusions at various points, the pouch containers are also disadvantageous in that these protruding weld seal portions make tactile impression of the pouch container very bad.

(A-4) The conventional art disclosed in utility model registration No. 2573927 allows the container to secure the necessary ability to retain its own shape by making up the entire tube as a tubular container. The shoulder can be reversed and caved into the body, and the container can be held in the inverted position, thus allowing the tube to be handled in a far better way than when handling those pouch containers made of film. Since the weld seal portion exists only at the bottom, this portion never gives a bad tactile impression when the tubular container is handled.

(A-5) However, the tubular container disclosed in utility model registration No. 2573927 has the body in a cylindrical shape, which is less susceptible to changes. Consequently, the container was unsatisfying because the outer appearances of the entire container remained simple and unattractive.

(A-6) Because of the body in the cylindrical shape, the outer surface looks almost similar when it is viewed from any viewpoint around the tube. A problem here arises from a significant limitation in showing the name of product in big characters or in making decorative print effectively.

(A-7) Another problem is that, because of the cylindrical body, there would be dead spaces between adjoining tubular containers, with the resultant inefficient packaging, when the rows of containers are packed tightly in parallel in a cardboard box.

(A-8) Still another problem is that, because of the cylindrical body, the bottom seal portion would have a width 1.6 times as much as the diameter of the body. Therefore, the flattened bottom seal would have to be protruded laterally to a similar extent as in ordinary tubular containers. In that case, the tactile impression may not always be fully comfortable.
JP 2001114307 discloses a tubular container having a trunk formed in a tapered tubular shape, and having a shoulder part which is elastically turnable and able to deform toward the inside of the trunk.

(A-9) This invention has been made to solve the afore-mentioned problems found in conventional art. The technical problems of this invention are to facilitate changes in outer appearances, to provide the container with large surfaces for labeling, to make packaging more efficient, and to minimize the lateral protrusions of the bottom seal portion. The object of this invention is to provide a blow-molded pouch container, which has an interesting shape and effective labeling surfaces, allows as many pouches as possible to be packed in a cardboard box, and is comfortable to use.

### Disclosure of the Invention

(B-8) The means of carrying out the invention of Claim 1 to solve the afore-mentioned technical problems exists in the configuration that the blow-molded pouch container has a thin wall and is molded from a primary molded product of synthetic resins and that this container comprises:
a body;
a peripheral edge portion disposed circumferentially at upper end of said body to form at least a peripheral upper edge wall;
a shoulder portion in a roughly truncated conical shape, projected upward from a top flat surface that connects the peripheral edge portion to the shoulder portion, and disposed in a manner in which said shoulder can be flexibly reversed and caved in said body;
a neck disposed at the upper end of said shoulder portion;
a bottom seal portion, which is molded and sealed by pressing and flattening the lower end of the body from front and rear, i.e., in the directions along the short axis of said body and by welding a flat lower end portion thus obtained; characterised in that the body is in the shape of a roughly elliptical cylinder; and the container further includes
a bendable circumferential rib of a ridge structure having both mountain and valley folds, which is disposed at a connecting portion between the shoulder and the top flat surface.

(B-9) When referred to in this invention, "roughly elliptical" shape includes all of ellipse, a racetrack shape, the shape of a rugby ball, and circular shapes that are suitably flattened sideways.

(A-12) In the invention of Claim 1, the pouch container is blow-molded, with the shoulder being kept in the upward projected position. Then, the blow-molded container is cut at its lower end to obtain the primary molded product. After this primary molded product is filled with the contents, the bottom is sealed to obtain the finished pouch container.

(A-13) Until the primary molded product is filled with the contents and is brought to completion by sealing the bottom, the shoulder should be maintained in the state in which it has been reversed and caved in the body.

(A-14) The reason is that, if the product is completed by filling the pouch with the contents and sealing the bottom with the shoulder being kept in the state in which it is projected upward, then there is a fear that the shoulder cannot be reversed and caved in the body due to an inner pressure that increases when the shoulder is reversed and caved in so that the blow-molded pouch container would be able to stand upright in the inverted position.

(B-14) The extent to which the shoulder undergoes reverse cave-in displacement is set at a level in which all the portions on and above the peripheral edge portion are brought downward to the height under and below the edge portion. Therefore, if the blow-molded pouch container is inverted and laid to rest under the condition that the shoulder has been reversed and caved in the body, the peripheral edge portion should serve as the firm and stable foot.

(B-15) The pouch container of this invention is a blow-molded product. The body in the shape of a roughly elliptical cylinder is pressed flat at its lower end from the front and the rear, i.e., in the direction along the short axis of the body, and is sealed by welding the flat end portion. The lateral protrusions caused by the flattened bottom seal can be minimized to quite a small extent when consideration is given to the lateral body width along the long axis of the body. It is also possible to reduce the long-axial width of the body gradually downward so that the bottom seal portion would not have any lateral protrusion.

(B-16) Being a blow-molded container with the body in the shape of a roughly elliptical cylinder, the pouch container of this invention can be molded, without adverse effects on the container functions, by changing partially the lateral width along the long axis of the body.

(B-17) Because the body has the shape of a roughly elliptical cylinder, each of the front and rear surfaces of the body has a wide area. These front and rear surfaces can be fully utilized as large labeling spaces.

(B-18) Since the blow-molded pouch container has the body in the shape of a roughly elliptical cylinder, the dead spaces among adjoining pouches can be reduced to a large extent when many pouches are packed in a cardboard box. In packaging, this can be done by first putting the rows of pouch containers in the box and then packing other rows of pouch containers in the dead spaces between rows on the same plane, with each side of the pouch being wedged between two pouches that have been packed first.
The ridge structure makes it possible for the bendable circumferential rib to be flexibly turned and deformed smoothly in the inward rib-turning direction, i.e., in the shoulder's reverse cave-in direction.
The flexibly deformed portion connecting between the top surface and the shoulder is in the circular shape. Therefore, it turns out that the inner stress generated by the flexible deformation uniformly acts on the entire circumference of this circular connecting portion. As a result, when the shoulder is reversed and caved in the body, the shoulder is not distorted but is stably and securely reversed and caved in the body.

The invention of Claim 2 includes the invention of Claim 1, and also comprises that the diameter at the lower end of the shoulder is set at a value slightly smaller than the short axis of the body.

In the invention of Claim 2, it is possible to set the diameter of the lower end portion of the shoulder at as large a value as possible. Thus, the upward or downward movement of the neck can be widened with the elastic reverse displacement of the shoulder. As a result, the peripheral edge portion would fulfill the stable foot function under the condition that the shoulder has been reversed and caved in. In contrast, in the state in which the shoulder is projected upward, it is possible for the neck to be located fully above the body, thus enabling the contents to be poured into another container.

The invention of Claim 3 includes the configuration of the invention of Claim 1 or 2, and also comprises that the peripheral edge portion has a structure in which the body wall has been bent and folded.

(B-13) In the invention of Claim 3, the peripheral edge portion is located at the upper end of the body to retain the pouch shape steadily. Therefore, the shoulder can be reversed and caved in the body, with the edge portion working as the fulcrum. Consequently, the reverse cave-in operation of the shoulder can be carried out steadily and securely.

(B-22) The means of carrying out the invention of Claim 4 includes the configuration of the invention of Claim 1, 2 or 3, and also comprises that a concavely curved lateral groove is disposed around the body wall at a position coming down from the upper end of the body by a distance a half as much as the short axis of the body.

(B-23) In the invention of Claim 4, the entire blow-molded pouch container can be flattened by bending the upper portion on and above the lateral groove to one side as much as possible, with the lateral groove serving as the folding line, under the condition that the entire body has been pressed flat from the front and the rear. This upper portion corresponds to the integral part including the upper end of the body, the shoulder (including the top flat surface, depending on the circumstances), and the neck.

(B-24) The invention of Claim 5 includes the configuration of the invention of Claim 1, 2, 3 or 4, and also comprises that a pinched-in waist portion with a diameter smaller than the long axis of the body is disposed at least in a portion of the body.

(B-25) In the invention of Claim 5, a pinched-in waist portion is provided to give interesting, diversified appearances to the body and to facilitate handling.

(B-26) The means of carrying out the invention of Claim 6 includes the configuration of the invention of Claim 1, 2, 3, 4 or 5, and also comprises that the body wall has an at least 3-layered structure comprising an inner layer, an intermediate layer, and an outer layer laminated with one another.

(B-27) In the invention of Claim 6, the synthetic resin molding material for use in each layer can be selected in response to the functions, characteristics, and physical properties required for the blow-molded pouch container. Thus, it becomes possible to obtain the container that fulfills any desired functions.

(B-28) The means of carrying out the invention of Claim 7 includes the configuration of the invention of Claim 6, and also comprises that the intermediate layer is molded from a synthetic resin material having a high gas barrier property.

(B-29) In the invention of Claim 7, there can be obtained a blow-molded pouch container having a high gas barrier property.

(B-30) The means of carrying out the invention of Claim 8 includes the configuration of the invention of Claim 6, and also comprises that the intermediate layer is molded from a reworked synthetic resin material.

(B-31) In the invention of Claim 8, reworked synthetic resin materials can be effectively utilized easily and safely.

### Brief Description of the Drawings

Fig. 1 is an entire front elevational view of the pouch container in the first embodiment of this invention.
Fig. 2 is a front elevational view of the pouch container in the embodiment shown in Fig. 1, which is laid to rest in its inverted position.
Fig. 3 is a partly cutaway, side view of the pouch container in the embodiment shown in Fig. 1.
Fig. 4 is a plan view of the pouch container in the embodiment shown in Fig. 1.
Fig. 5 is an enlarged cross-section of the circle-A portion, as indicated by an arrow in Fig. 1.
Fig. 6 is an entire front elevational, partly cross-sectional view showing a pouch container not forming part of the present invention.
Fig. 7 is a partly cutaway, side view of the pouch container shown in Fig. 6.
Fig. 8 is a plan view of the pouch container shown in Fig. 6.
Fig. 9 is an enlarged cross-section of an example of the peripheral edge portion in the circle D, as indicated by an arrow in Fig. 6,
Fig. 10 is an enlarged cross-section of another example of the peripheral edge portion in the circle D, as indicated by an arrow in Fig. 6,
Fig. 11 is an entire front elevational, partly cross-sectional view showing the pouch container in the second embodiment of this invention.
Fig. 12 is a plan view of the pouch container in the embodiment shown in Fig. 11.
Fig. 13 is an enlarged cross-section of the circle-B portion, as indicated by an arrow in Figs. 1 and 11.
Fig. 14 is an enlarged cross-section of the circle-C portion, as indicated by an arrow in Figs. 1 and 11.
Fig. 15 is a side view of the pouch container in the embodiment shown in Figs. 1 and 11, which has been flattened for the bulk reduction.
Fig. 16 is an entire front elevational view of the pouch container in the third embodiment of this invention.
Fig. 17 is a plan view of the pouch container in the embodiment shown in Fig. 16.

### Preferred Embodiments of the Invention

(B-32) This invention is further described with respect to the preferred embodiments, now referring to the drawings.

The blow-molded pouch container of a large size according to this invention is molded by a blow-molding means to give a thin wall in such a way that 1g of synthetic resin molding materials will give a volume of 40 cc or more.

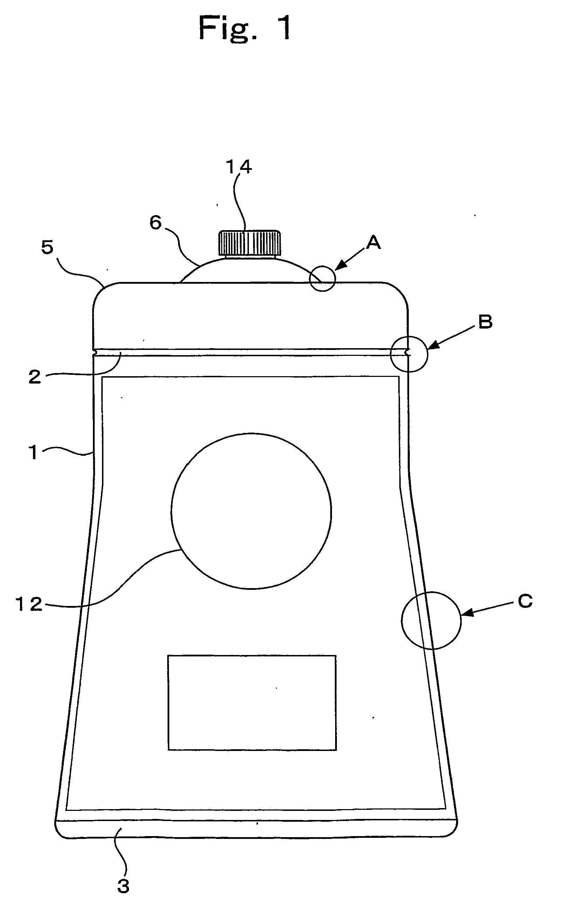

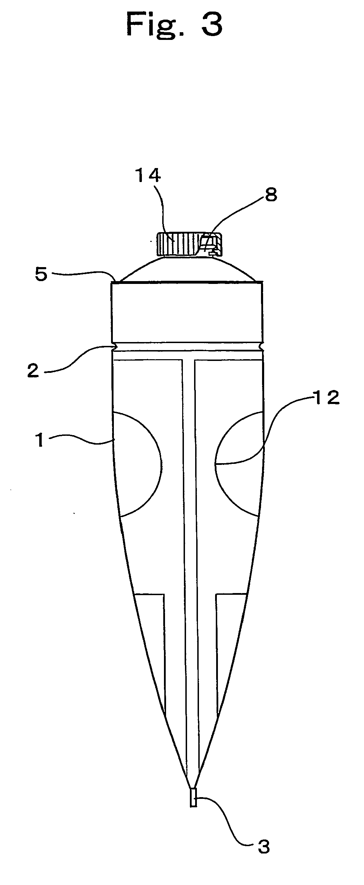

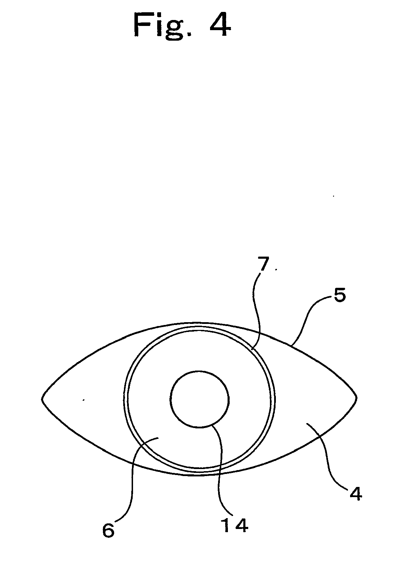

(A-34) Figs. 1-5 show the blow-molded pouch container in the first embodiment of this invention. The container comprises a body 1 in a roughly elliptical shape; a flat top surface 4 with an opening in the center; a peripheral edge portion 5 disposed between the flat top surface and the body 1; a shoulder portion 6 in a roughly truncated conical shape, projected upward from the edge of the central opening of the flat top surface 4 and disposed in such a manner that this shoulder 6 can be flexibly reversed and caved in the body 1; a neck 8 disposed on the shoulder 6 and having a cap 14, which is screwed on or off to close or open the neck 8; and a bottom seal portion 3, which is molded and sealed by pressing flat the lower end of the body 1 and by welding the flat end portion thus obtained.

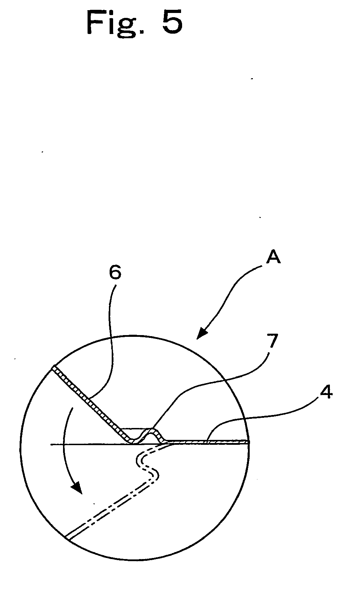

(A-35) A bendable circumferential rib 7 (See Fig. 5) is disposed in a circle around the foot of the shoulder 6 to connect between the top flat surface 4 and the shoulder 6, and has a ridge structure having both the mountain and valley folds so that the rib 7 easily undergoes elastic deformation.

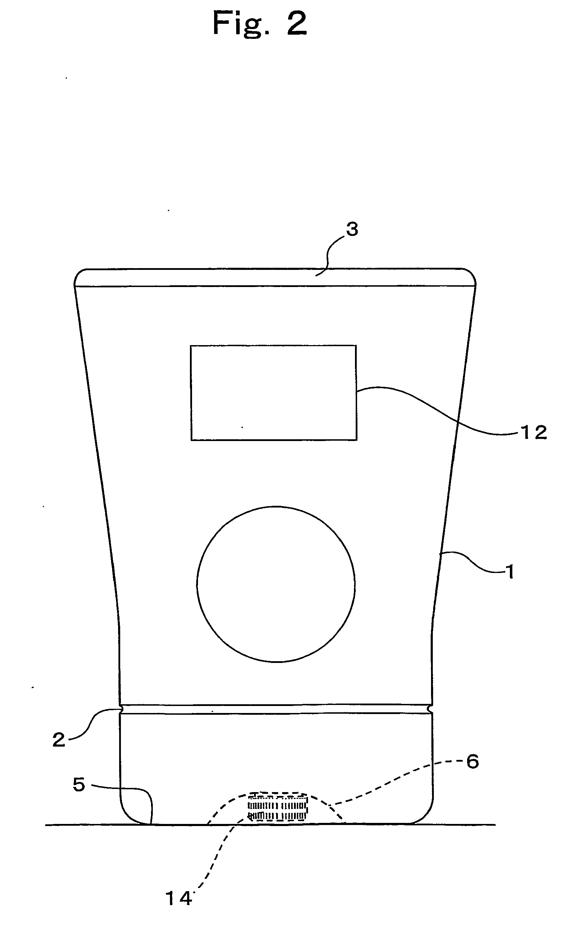

(A-36) The shoulder 6 can be reversed and caved in stably and securely because the bendable circumferential rib 7 is disposed at the connecting portion between the top flat surface 4 and the shoulder 6 and because the shoulder 6 is not in the shape of an elliptical cylinder but in a truncated conical shape. As shown in Fig. 5 by virtual lines, the top flat surface 4, too, is slightly depressed in the central area, along with the reverse cave-in of the shoulder 6. When the blow-molded pouch container is laid to rest in its inverted position; the peripheral edge portion 5 serves as the foot, as shown in Fig. 2. Also helped by the existence of the top flat surface 4, the pouch container demonstrates a sufficient ability to stand upright stably once it is inverted.

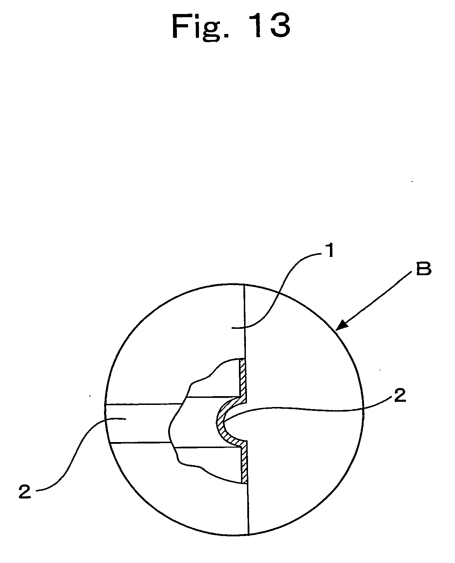

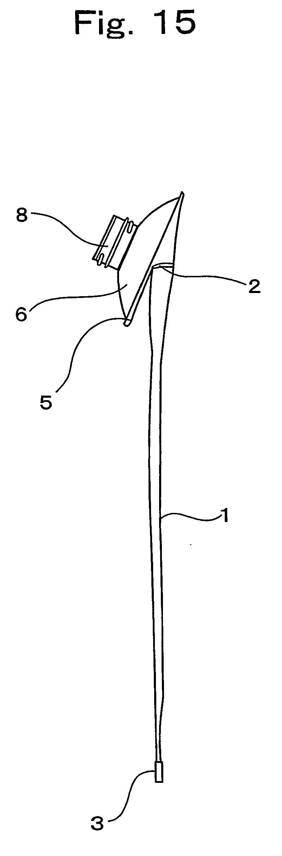

(A-37) A concavely curved lateral groove 2 is disposed around the body wall at a position coming down from the upper end of the body by a distance of a half the short axis of the body 1 (See Fig. 13). As shown in Fig. 15, the upper portion on and above the lateral groove can be bent to one side and folded over the flat body 1, with the lateral groove serving as the folding line, under the condition that the entire body 1 has been pressed flat from the front and the rear.

(A-38) Thus, in the flattened and folded state, the blow-molded pouch container can be handled quite easily at the time of waste disposal because a full bulk-decreasing effect can be obtained. The efficiency of transportation can also be enhanced greatly when the container manufacturer transports those primary products of the blow-molded pouch containers to commercial product manufacturers' sites in the state in which the bottom seal portion 3 has not yet been formed.

(A-39) Labels 12 are placed on the front and rear surfaces of the body 1 by means of in-mold labeling or silkscreen printing.

(A-40) Because the body 1 is in the shape of a roughly elliptical cylinder, the front and rear surfaces of the body 1 have a large area, when considering the volume of the blow-molded pouch container. Therefore, labels 12 can be placed freely to obtain a high labeling effect, without setting a spatial limit to the container.

(A-41) In order for the labeling area to be further widened, it is also possible for the blow-molded pouch container of this invention to have a configuration in which no lateral groove 2 is disposed so that the entire front and rear surfaces are used as the labeling surfaces.

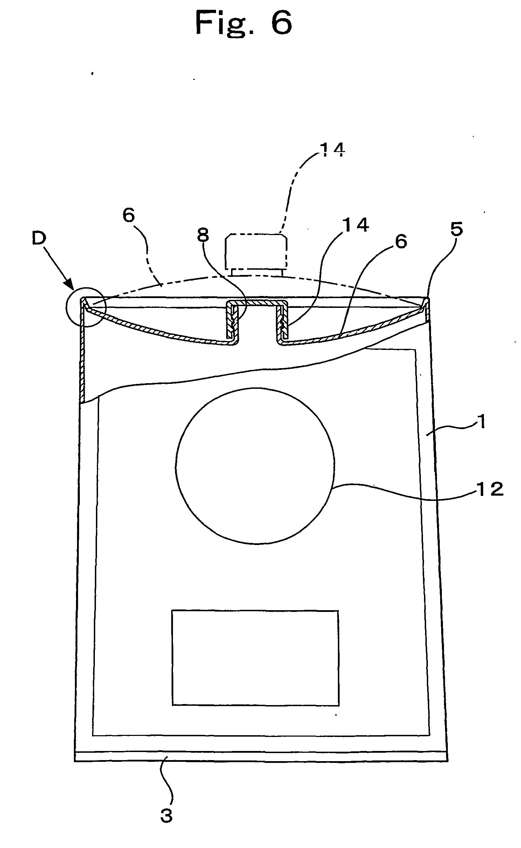

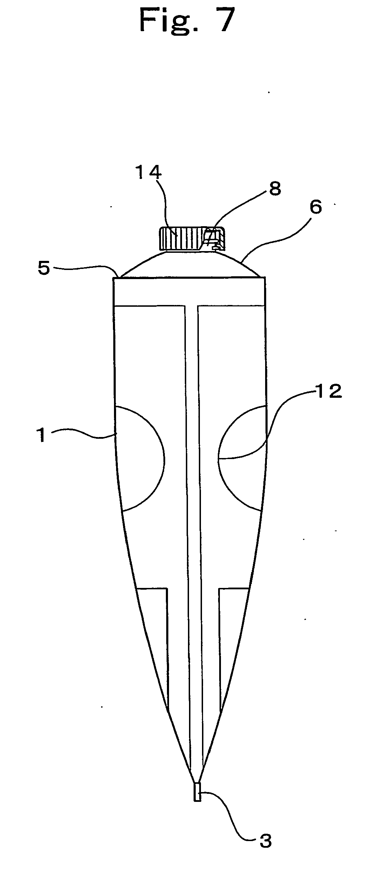

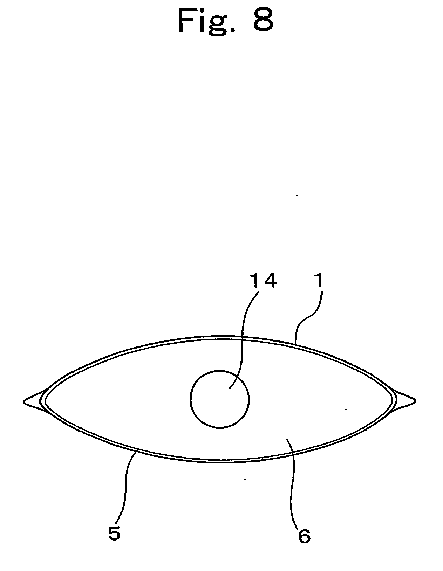

(B-33) Figs. 6-10 show a blow-molded pouch container. The container comprises a body 1 in the shape of a roughly elliptical cylinder; a peripheral edge portion 5 disposed at the upper end of the body 1 and having a structure in which the body wall is bent and folded along the upper end of the body 1; a shoulder portion 6 in a roughly truncated conical shape, projected upward and disposed in such a manner that this shoulder 6 can be flexibly reversed and caved in the body 1; a neck 8 disposed on the shoulder 6 and having a cap 14, which is screwed on or off to close or open the neck 8; and a bottom seal portion 3, which is molded and sealed by pressing flat the lower end of the body 1 from the front and the rear and by welding the flat end portion thus obtained.

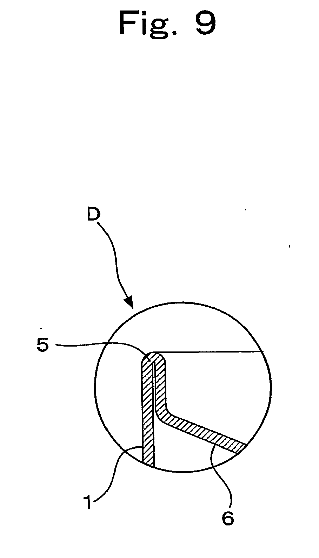

(B-34) The peripheral edge portion 5 disposed between the body 1 and the shoulder 6 has a structure in which the body wall has been bent and folded so as to be able to demonstrate stable foot function when the shoulder 6 was subjected to reverse cave-in displacement. As shown in Figs. 6 and 9, the peripheral edge portion 5 stands upright at the upper end of the body 1.

(B-35) In the case of the peripheral edge portion 5 shown in Fig. 9, the blow-molded product having a thin wall is obtained under the condition that the shoulder 6 is projected upward. After the blow-molded product is cut at the lower end of the body 1, the connecting portion between the body 1 and the shoulder 6 is bent inward, and the shoulder 6 is caved in the body 1. In this state, the connecting portion that has been bent and folded is fixed by a thermoforming means to obtain a folded wall. Thus, the peripheral edge portion 5 is molded.

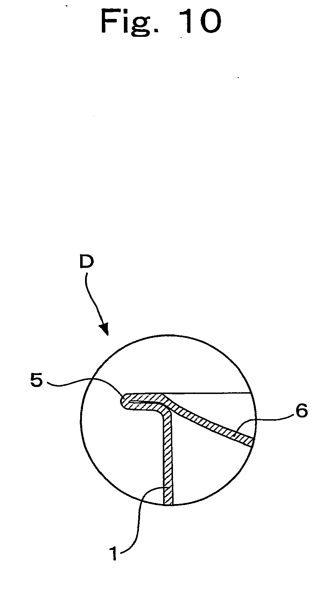

(B-36) In the case of the container shown in Fig. 10, the peripheral edge portion 5 is in the shape of a narrow brim disposed outward at the upper end of the body 1. The blow-molded product having a thin wall is cut at the lower end under the conditions that the shoulder 6 is projected upward and that the connecting portion between the body 1 and the shoulder 6 is protruded outward. Then, the connecting portion between the body 1 and the shoulder 6 is pressed flat from the upside and the downside. In this state, the peripheral edge portion 5 is molded so as to fix it into a folded wall structure by a thermoforming means.

(B-37) The peripheral edge portion 5 shown in Figs. 9 and 10 is satisfactory when the wall is merely bent and folded by thermoforming. However, mechanical strength of the edge portion 5 can be fully increased when the folded portion is welded or adhered.

(B-38) Labels 12 are placed on the front and rear surfaces of the body 1 by means of in-mold labeling or silkscreen printing.

(B-39) Because the body 1 is in the shape of a roughly elliptical cylinder, the front and rear surfaces of the body 1 have a large area. Therefore, labels 12 can be placed freely to obtain a high labeling effect, without setting a spatial limit to the container.

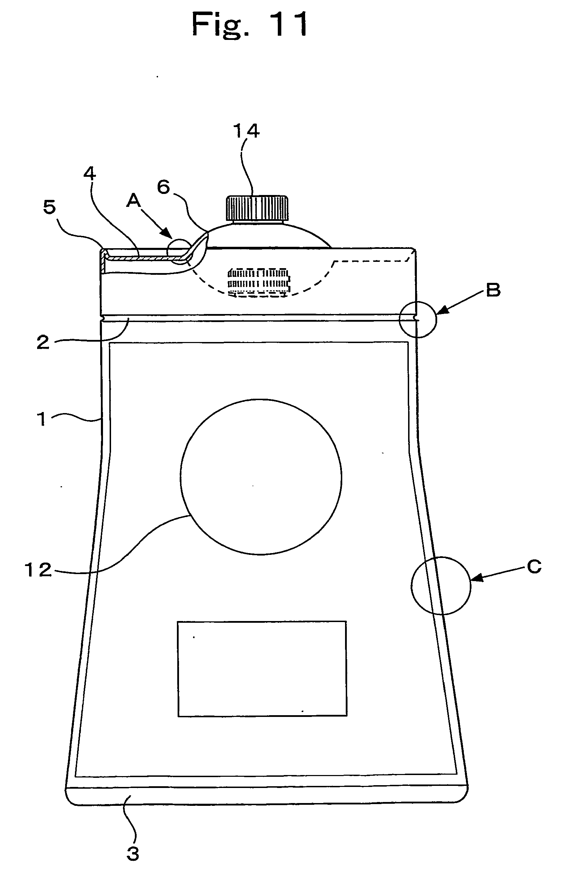

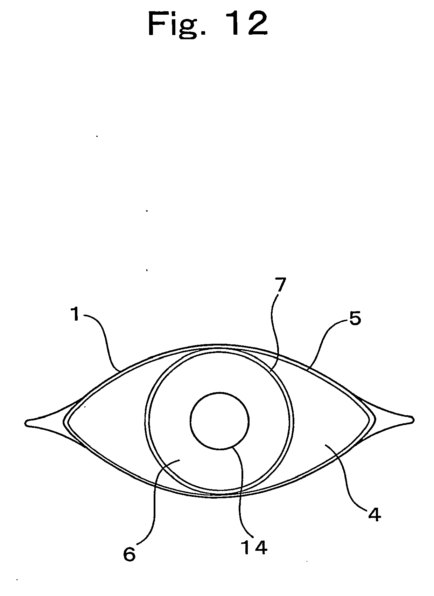

(B-40) Figs. 11 and 12 show the second embodiment of this invention. The pouch container in the second embodiment comprises a top flat surface 4 disposed between the peripheral edge portion 5 and the shoulder 6; a shoulder 6 in the truncated conical shape; a bendable circumferential rib 7 (See Fig. 5), which is disposed in a circle around the foot of the shoulder 6 to connect between the top flat surface 4 and the shoulder 6 and is provided with a ridge structure having both the mountain and valley folds so that the rib 7 is easily subject to elastic deformation; and a bottom seal portion 3.

(B-41) The shoulder 6 can be reversed and caved in stably and securely because the bendable circumferential rib 7 is disposed at the connecting portion between the top flat surface 4 and the shoulder 6 and because the shoulder 6 is not in the shape of an elliptical cylinder but in a truncated conical shape.

(B-42) A concavely curved lateral groove 2 is disposed around the body wall at a position coming down from the upper end of the body by a distance of a half the short axis of the body 1 (See Fig. 13). As shown in Fig. 15, the upper portion on and above the lateral groove can be bent to one side and folded over the flat body 1, with the lateral groove serving as the folding line, under the condition that the body 1 has been pressed flat from the front and the rear.

(B-43) Thus, in the flattened and folded state, the blow-molded pouch container can be handled quite easily at the time of waste disposal because a full bulk-decreasing effect can be obtained. The efficiency of transportation can also be enhanced greatly when the container manufacturer transports those primary products of the blow-molded pouch containers to commercial product manufacturers' sites in the state in which the bottom seal portion 3 has not yet been formed.

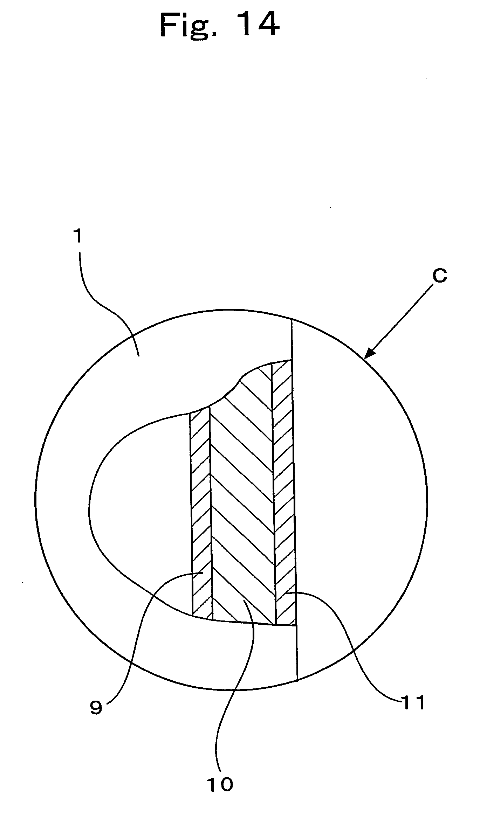

(B-44) Fig. 14 is a partially enlarged cross-section showing a laminated wall structure of the blow-molded pouch container, in which an inner layer 9, an intermediate layer 10, and an outer layer 11 are laminated in this order. A suitable synthetic resin material is selected for each layer, taking into consideration the resistance to contents for the inner layer 9, the barrier property and aggregate function for the intermediate layer 10, and the printability, the tactile impression, and the wear resistance for the outer layer 11, respectively.

(B-45) A blow-molded pouch container having a high gas barrier property can be obtained by molding the inner layer 9 and the outer layer 11 with such a synthetic resin material as polyethylene, polypropylene, or polyethylene terephthalate, and by molding the intermediate layer 10 with a synthetic resin having a high gas barrier property, such as an ethylene vinyl alcohol copolymer, a polyamide containing meta-xylylene radicals, or an ethylene naphthalate-ethylene terephthalate copolymer. Reworked resin materials can be utilized for the intermediate layer 10 to achieve a large reduction in the cost of expensive synthetic resins.

(B-46) The laminate structure comprising the three layers of inner, intermediate, and outer layers is satisfactory for the purpose of this invention. The layer configuration can be suitably selected. For instance, both the gas barrier layer and the reworked resin layer can be placed as intermediate layers, or an adhesive layer or layers can be disposed between two adjoining layers.

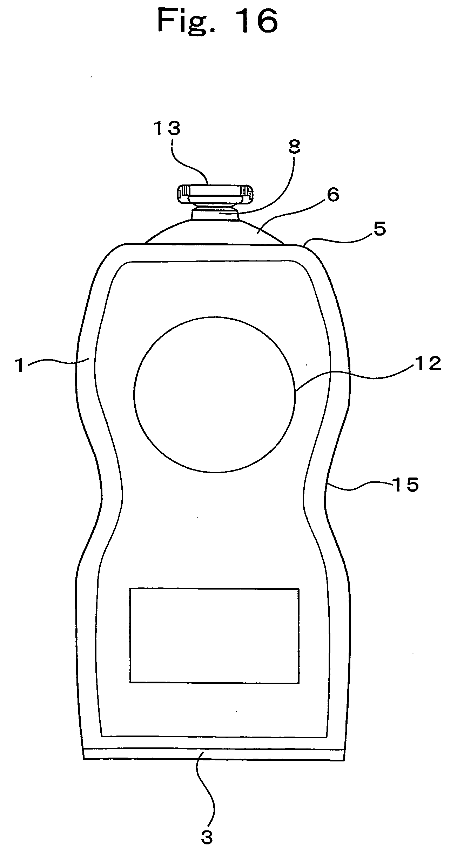

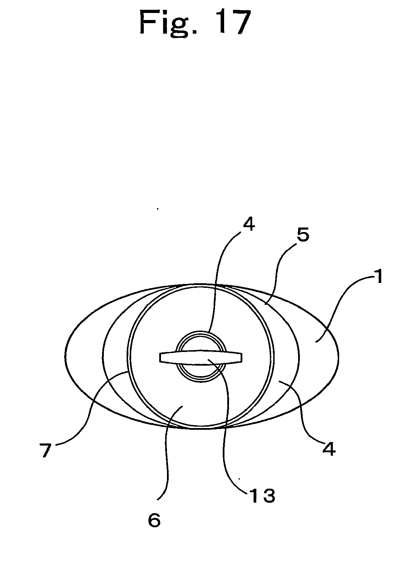

(B-47) Figs. 16 and 17 show the blow-molded pouch container in the third embodiment of this invention. The mouth of the neck 8 is closed by an integrated pull tab 13, which can be pulled out with the fingers. The pouch is provided with a pinched-in waist portion 15 disposed at the middle height of the body 1, with the long axis of the waist portion 15 being set at a length smaller than that of the body 1.

(B-48) In this third embodiment, the entire pouch container can be molded integrally, thus making production and product handling much easier. The pinched-in waist portion 15 serves to provide the pouch container with interesting, diversified appearances.

(B-49) In addition, the pinched-in waist portion 15 is also effective in making the pouch container convenient to use.

(B-50) Concerning the neck 8 in this embodiment, the pouch can also be opened or closed by means of the cap 14 just as it is used in the first embodiment.

### Industrial Applicability

(B-51) This invention having the above-described configuration has the following effects:
In the invention of Claim 1, shoulder's reverse cave-in displacement is carried out steadily and stably because the peripheral edge portion serves as the fulcrum when the shoulder is reversed and caved in. There is no portion of the container higher than the upper end of the peripheral edge portion under the condition that the shoulder has been reversed and caved in the body. Therefore, the peripheral edge portion is able to fulfill its function as the firm and stable foot when the container is in the inverted position.

(A-49) The pouch container of Claim 1 has the body in the shape of an elliptical cylinder. Therefore, protrusions from both the right and left sides are kept as small as possible, at the time when the bottom seal portion is molded and sealed by pressing flat the lower end of the body from the front and the rear and by welding the flat end portion thus obtained. Furthermore, since the pouch container of this invention is a blow-molded product, the long-axial width of the body at the flattened lower end can be limited to a value not more than the corresponding width of the remaining portion of the body at the time when the bottom seal is molded. Consequently, it is possible to minimize the unfavorable tactile impression of the blow-molded pouch container caused by the protrusions at the lower end of the body.

(A-50) The body in the shape of an elliptical cylinder can have more diversified appearances, and thus a more interesting container is provided, than in the case of the body in the cylindrical shape.

(A-51) The body in the shape of an elliptical cylinder is allowed to have large front and rear surface areas along the short-axial direction when the volume of the blow-molded pouch container is taken into account. Naturally, the labels including directions and decorations can be placed in a fully effective way.

(A-52) In packaging, the body in the shape of an elliptical cylinder is also convenient to minimize the dead spaces between adjoining containers. This can be done by arranging the rows of pouch containers in an alternately misaligned way when the containers are packed in a box. Thereby the container packaging efficiency can be enhanced.

(B-53) The shoulder of the container can be reversed and caved in the body always constantly and smoothly without fail. As a result, the blow-molded pouch container can be displayed steadily in its inverted position. Any narrow space can be effectively utilized to display the pouch containers stably in this position.

In the invention of Claim 2, it is possible to widen the upward or downward movement of the neck, which follows the elastic reverse displacement of the shoulder. Consequently, the peripheral edge portion demonstrates the stable foot function. In addition, it is also possible for the contents to be poured easily into another container.

In the invention of Claim 3, the shoulder can be reversed and caved in, with the peripheral edge portion serving as the fulcrum. Since the edge portion has a full ability to retain the shape of the container stably, the shoulder's reverse cave-in displacement is carried out steadily and stably. As a result, the blow-molded pouch container can be displayed stably in its inverted position. Any narrow space can be effectively utilized to display the pouch containers stably in this position.

(B-54) In the invention of Claim 4, it is fully possible to reduce the bulkiness of the blow-molded pouch container or the primary product of the blow-molded pouch container having the body kept open at its lower end. The flattened containers or their primary products are convenient for efficient waste disposal or for the transportation from the container manufacturer's site to commercial product manufacturers' sites.

(B-55) In the invention of Claim 5, some preferable, interesting varieties in appearances and handling are given to the blow-molded pouch container, and thereby it is possible for the pouch container to have an enhanced value as a commercial product.

(B-56) In the invention of Claim 6, 7, or 8, any desired blow-molded pouch container can be readily obtained because synthetic resin materials can be selected and combined with one another in response to the characteristics, functions, and physical properties that are required for the blow-molded pouch container of this invention.

## Claims

1. A blow-molded container in the shape of a pouch to be molded by a blow-molding process from a primary molded product made of synthetic resins, said container having a thin wall and comprising:
a body (1);
a peripheral edge portion (5) disposed circumferentially at upper end of said body (1) to form at least a peripheral upper edge wall;
a shoulder portion (6) in a roughly truncated conical shape, projected upward from a top flat surface (4) that connects the peripheral edge portion (5) to the shoulder portion (6), and disposed in a manner in which said shoulder (6) can be flexibly reversed and caved in said body (1);
a neck (8) disposed at the upper end of said shoulder portion (6);
a bottom seal portion (3), which is molded and sealed by pressing and flattening the lower end of the body (1) from front and rear, i.e., in the directions along the short axis of said body (1) and by welding a flat lower end portion thus obtained; **characterised in that** the body (1) is in the shape of a roughly elliptical cylinder; and the container further includes a bendable circumferential rib (7) of a ridge structure having both mountain and valley folds, which is disposed at a connecting portion between the shoulder (6) and the top flat surface (4).

2. The blow-molded container in the shape of a pouch, according to Claim 1, wherein diameter at lower end of the shoulder (6) is set at a value slightly smaller than the short axis of the body (1).

3. The blow-molded container in the shape of a pouch, according to Claim 1 or 2, wherein the peripheral edge portion (5) has a structure in which the body wall is bent and folded.

4. The blow-molded container in the shape of a pouch, according to Claim 1, 2 or 3, wherein a lateral groove (2) is concavely curved in, and disposed around, the body wall at a position coming down from the upper end of the body (1) by a distance a half as much as the short axis of said body (1).

5. The blow-molded container in the shape of a pouch, according to Claim 1, 2, 3, or 4, wherein a pinched-in waist portion (15), with its long axis smaller than that of the body (1), is disposed at least in a portion of the body (1).

6. The blow-molded container in the shape of a pouch, according to Claim 1, 2, 3, 4, or 5, wherein the body wall has an at least 3-layered structure comprising an inner layer (9), an intermediate layer (10), and an outer layer (11) laminated with one another.

7. The blow molded container in the shape of a pouch, according to Claim 6, wherein said intermediate layer (10) is molded from a synthetic resin material having a high gas barrier property.

8. The blow-molded container in the shape of pouch, according to Claim 6, wherein said intermediate layer (10) is molded from a reworked synthetic resin material.

## Patentansprüche

1. Blasgeformter Behälter in Form eines Beutels, der durch ein Blasformverfahren aus einem primären Formerzeugnis aus Kunstharzen zu formen ist, wobei der Behälter dünnwandig ist und umfasst:
einen Körper (1);
einen Umfangskantenbereich (5), der in Umfangsrichtung an dem oberen Ende des Körpers (1) angeordnet ist, um zumindest eine umfangsseitige Wand an der Oberkante zu bilden;
einen Schulterbereich (6) in einer annähernd kegelstumpfartigen Form, der von einer ebenen Oberfläche (4), die den Umfangskantenbereich (5) mit dem Schulterbereich (6) verbindet, nach oben verlängert ist und in einer solchen Weise angeordnet ist, dass die Schulter (6) flexibel umgewendet und in den Körper (1) hinein gestülpt werden kann;
einen Hals (8), der an dem oberen Ende des Schulterbereichs (6) angeordnet ist;
einen Bodenversiegelungsabschnitt (3), der durch Pressen und Abflachen des unteren Endes (1) von vorne und von hinten, d.h. in den Richtungen entlang der kurzen Achse des Körpers (1), und durch Verschweißen eines **dadurch** erhaltenen flachen unteren Endbereichs geformt und versiegelt ist; **dadurch gekennzeichnet,**
**dass** der Körper (1) die Form eines annähernd elliptischen Zylinders hat und dass der Behälter ferner eine biegsame Rippe (7) einer sowohl Bergfalten als auch Talfalten enthaltenden Kanellierungsstruktur aufweist, die an einem Verbindungsbereich zwischen der Schulter (6)
und der ebenen Oberfläche (4) vorgesehen ist.

2. Blasgeformter Behälter in Form eines Beutels gemäß Anspruch 1, wobei der Durchmesser an dem unteren Ende der Schulter (6) auf einen geringfügig kleineren Wert als die kurze Achse des Körpers (1) festgelegt ist.

3. Blasgeformter Behälter in Form eines Beutels gemäß Anspruch 1 oder 2, wobei der Umfangskantenbereich (5) eine Struktur hat, bei welcher die Körperwand geknickt und gefaltet ist.

4. Blasgeformter Behälter in Form eines Beutels gemäß Anspruch 1, 2 oder 3, wobei eine Querrille (2) an einer Position, deren Abstand von dem oberen Ende des Körpers (1) nach unten die Hälfte der kurzen Achse des Körpers (1) beträgt, rund um die Wand des Körpers angeordnet und in dem Körper nach innen gewölbt ist.

5. Blasgeformter Behälter in Form eines Beutels gemäß Anspruch 1, 2, 3 oder 4, wobei ein eingeklemmter Taillenbereich (15), dessen lange Achse kürzer als die des Körpers (1) ist, zumindest in einem Teil des Körpers (1) vorgesehen ist.

6. Blasgeformter Behälter in Form eines Beutels gemäß Anspruch 1, 2, 3, 4 oder 5, wobei die Wand des Körpers eine zumindest 3-schichtige Struktur aufweist, die eine Innenschicht (9), einen Zwischenschicht (10) und eine Außenschicht (11) umfasst, die miteinander laminiert sind.

7. Blasgeformter Behälter in Form eines Beutels gemäß Anspruch 6, wobei die Zwischenschicht (10) aus einem Kunstharzmaterial geformt ist, das die Eigenschaft einer hochwirksamen Gasbarriere besitzt.

8. Blasgeformter Behälter in Form eines Beutels gemäß Anspruch 6, wobei die Zwischenschicht (10) aus einem aufbereiteten Kunstharzmaterial geformt ist.

## Revendications

1. Contenant moulé par soufflage sous forme de sachet destiné à être moulé par l'intermédiaire d'un procédé de moulage par soufflage à partir d'un produit moulé primaire fait de résines synthétiques, ledit contenant possédant une paroi mince et comprenant :
un corps (1) ;
une partie de bord périphérique (5) disposée de façon circonférentielle au niveau de l'extrémité supérieure dudit corps (1) pour former au moins une paroi de bord supérieur périphérique ;
une partie d'épaulement (6) de forme approximativement conique tronquée, en saillie vers le haut à partir d'une surface plate supérieure (4) qui relie la partie de bord périphérique (5) à la partie d'épaulement (6), et disposée de manière selon laquelle ledit épaulement (6) peut être inversé et enfoncé de façon flexible dans ledit corps (1) ;
un goulot (8) disposé au niveau de l'extrémité supérieure de ladite partie d'épaulement (6) ;
une partie d'étanchéité inférieure (3), qui est moulée et rendue étanche en comprimant et aplatissant l'extrémité inférieure du corps (1) à partir de l'avant et
l'arrière, c'est-à-dire dans les directions le long du petit axe dudit corps (1) et en soudant une partie d'extrémité inférieure plate ainsi obtenue ; **caractérisé en ce que** le corps (1) présente la forme d'un cylindre approximativement elliptique ; et le contenant comprend en outre une nervure circonférentielle flexible (7) d'une structure de saillie possédant des plis de crête et de creux, qui est disposée au niveau de la partie de liaison entre l'épaulement (6) et la surface plate supérieure (4).

2. Contenant moulé par soufflage sous forme de sachet, selon la revendication 1, dans lequel le diamètre au niveau de l'extrémité inférieure de l'épaulement (6) est établi à une valeur légèrement inférieure à celle du petit axe du corps (1).

3. Contenant moulé par soufflage sous forme de sachet, selon la revendication 1 ou 2, dans lequel la partie de bord périphérique (5) possède une structure dans laquelle la paroi de corps est fléchie et pliée.

4. Contenant moulé par soufflage sous forme de sachet, selon la revendication 1, 2 ou 3, dans lequel une rainure latérale (2) est incurvée de façon concave dans, et disposée autour de, la paroi de corps dans une position descendant à partir de l'extrémité supérieure dudit corps (1) selon une distance égale à la moitié du petit axe dudit corps (1).

5. Contenant moulé par soufflage sous forme de sachet, selon la revendication 1, 2, 3 ou 4, dans lequel une partie de taille pincée vers l'intérieur (15), avec son grand axe inférieur à celui du corps (1), est disposée au moins dans une partie du corps (1).

6. Contenant moulé par soufflage sous forme de sachet, selon la revendication 1, 2, 3, 4 ou 5, dans lequel la paroi de corps possède au moins une structure à trois couches comprenant une couche intérieure (9), une couche intermédiaire (10), et une couche extérieure (11) stratifiées les unes avec les autres.

7. Contenant moulé par soufflage sous forme de sachet, selon la revendication 6, dans lequel ladite couche intermédiaire (10) est moulée à partir d'un matériau de résine synthétique possédant une propriété importante de barrière aux gaz.

8. Contenant moulé par soufflage sous forme de sachet, selon la revendication 6, dans lequel ladite couche intermédiaire (10) est moulée à partir d'un matériau de résine synthétique re-travaillé.
